# EUROPÄISCHE PATENTSCHRIFT

(11) **EP 2 740 956 B1**
(45) Veröffentlichungstag und Bekanntmachung des Hinweises auf die Patenterteilung: **10.01.2018**
(21) Anmeldenummer: 13005024.8
(22) Anmeldetag: 21.10.2013
(51) Int. Cl.: F16C 33/66, F04D 19/04, F16N 7/36

(54) **Schmiereinrichtung für ein Wälzlager**
Lubricating device for a roller bearing
Dispositif de lubrification pour un palier à roulement

(30) Priorität: 05.12.2012 DE 102012023727
(43) Veröffentlichungstag der Anmeldung: 11.06.2014
(73) Patentinhaber: Pfeiffer Vacuum GmbH, 35614 Aßlar (DE)
(72) Erfinder: Mekota, Mirko, D-35630 Ehringshausen (DE)
(74) Vertreter: Manitz Finsterwald Patentanwälte PartmbB

(56) Entgegenhaltungen:
- EP-A2- 1 921 322
- WO-A1-2006/131694
- DE-A1-102007 054 632
- DE-B3-102005 003 203
- FR-A1- 2 310 481
- US-B2- 7 367 429

## Beschreibung

### Gebiet der Erfindung

Die Erfindung betrifft eine Schmiereinrichtung für ein Wälzlager, welches zur Lagerung einer mit hoher Drehzahl angetriebenen Welle vorgesehen ist, wobei Schmiermittel aus zumindest einem Schmiermittelspeicher über Fördermittel und eine Mantelfläche einer kegelstumpfförmig ausgebildeten Spritzspitze in das Wälzlager gefördert wird, und wobei die Spritzspitze über eine Schraubverbindung an einem eine Stirnfläche bildenden Ende der Welle, dem Wälzlager benachbart, befestigt ist.

### Stand der Technik

Vertikal verlaufende Wellen, die mit sehr hohen Drehzahlen von bis zu 100.000 Umdrehungen pro Minute angetrieben werden, finden insbesondere in Turbomolekularvakuumpumpen Anwendung. Die Welle ist dabei an einem dem elektrischen Antrieb benachbarten ersten Endes über ein Wälzlager in einem Pumpengehäuse gelagert, während an einem zweiten Ende der Welle zwischen dieser und dem Pumpengehäuse ein Permanentmagnetlager angeordnet sein kann. Um die Voraussetzungen für eine ausreichende Schmierung und Kühlung des Wälzlagers zu schaffen und somit dessen Lebensdauer zu verlängern, ist es an ein Umlaufschmiersystem angeschlossen.

Eine Schmiereinrichtung für ein Wälzlager der im Oberbegriff der Ansprüche 1 und 5 angegebenen Gattung ist aus der FR 2 310 481 A1 bekannt. Schmiereinrichtungen sind auch aus der WO 2006/131694 A1 und DE 10 2006 053 237 A1 bekannt. Die Turbomolekularvakuumpumpe aus der DE 10 2006 053 237 A1 weist dabei eine schnelldrehende Welle auf, die über ein Lagermodul in einem Unterteil eines Pumpengehäuses gelagert ist. Ferner befinden sich in dem Unterteil ein elektrischer Anrieb der Welle und ein Auslass für das von der Turbomolekularvakuumpumpe geförderte gasförmige Medium. Ein Oberteil des Pumpengehäuses weist einen Einlass für das gasförmige Medium auf und nimmt in seinem Inneren mit dem Oberteil verbundene Statorscheiben sowie auf der Welle angeordnete Rotorscheiben auf. Bestandteil des Lagermoduls sind ein in diesem angeordnetes Wälzlager und ein für dieses vorgesehenes Umlaufschmiersystem, das aus einem Schmiermittelspeicher, einem Abstreifer, einer Spritzspitze und einem Rücklaufspalt besteht. Dabei wird das Schmiermittel aus dem Schmiermittelspeicher, der aus einem saugfähigen und über Kapillarkräfte fördernden Material besteht, auf den radial zur Welle verlaufenden Abstreifer übertragen.

Der Abstreifer liegt mit seinem radial inneren Ende an einer Mantelfläche der konisch ausgebildeten Spritzspitze an, die gemeinsam mit der Welle mit hoher Drehzahl rotiert, so dass das Schmiermittel auf Grund der hohen Fliehkräfte entlang von dessen konisch ausgebildeter Außenmantelfläche in das Innere des Wälzlagers gefördert wird. Das aus dem Wälzlager austretende Schmiermittel gelangt anschließend über den Rücklaufspalt zurück in den Schmiermittelspeicher. Dabei ist die Welle an ihrem im Lagermodul geführten Ende mit einem konzentrisch verlaufenden Zapfen versehen, auf den die Spritzspitze aufgeschraubt wird.

Ausgehend vom vorstehend beschriebenen Stand der Technik ist es Aufgabe der vorliegenden Erfindung zu verhindern, dass Abrieb und Späne beim Anschrauben der Spritzspitze an die Welle unmittelbar in das bereits auf der Welle angeordnete Wälzlager gelangen oder sich an Flächen sammeln, die in diesem Bereich vom Schmiermittel benetzt werden.

### Offenbarung der Erfindung

Diese Aufgabe wird ausgehend vom Oberbegriff der Ansprüche 1 und 5 in Verbindung mit dessen kennzeichnenden Merkmalen gelöst. Die hierauf folgenden abhängigen Patentansprüche geben jeweils vorteilhafte Weiterbildungen der Erfindung wieder.
Gemäß der Erfindung soll, der Schraubverbindung benachbart, von der Stirnfläche der Welle ein Sammelraum zur Aufnahme von Spänen und Abrieb ausgehen. Eine Montage des Wälzlagers und der dieses auf der Welle fixierenden Spritzspitze sowie ein anschließender Betrieb der Turbomolekularvakuumpumpe erfolgen dabei vorzugsweise in deren Überkopfbetrieb, d.h., die Welle nimmt eine vertikale Lage ein und ist an ihrem oberen Ende über das Wälzlager gelagert. Da sich das Gewinde für die Schraubverbindung oberhalb des Wälzlagers befindet, konnten bislang feine Späne, die beim Schrauben der Spritzspitze entstehen, beim Anschrauben der Spritzspitze in das Wälzlager gelangen und dort die Wälzlagerlaufbahnen beschädigen, so dass die Lebensdauer des Wälzlagers erheblich eingeschränkt wurde.
Selbst dann, wenn die Späne restlos vom Gewinde entfernt wurden, konnte sich beim Anschrauben der Spritzspitze ein feiner Abrieb bilden, der in das Wälzlager gelangte und zu dessen vorzeitigen Verschleiß führte. Die geschilderten Probleme können auch dann auftreten, wenn die Montage und der Betrieb der Turbomolekularvakuumpumpe nicht in einer Überkopflage erfolgen, sondern das Wälzlager und die Spritzspitze sich am unteren Ende der Welle befinden. Die Späne oder der Abrieb können auch in den Schmiermittelumlauf gelangen, weil sie auf die Mantelfläche der Spritzspitze oder auf die horizontal verlaufenden Fördermittel gelangen. Diese Probleme werden erfindungsgemäß dadurch beseitigt, dass von der Stirnfläche der Welle ein Sammelraum ausgeht, in den die Späne und der Abrieb selbsttätig beim Anschrauben der Spritzspitze gefördert werden. Damit kann sehr wirkungsvoll verhindert werden, dass diese Bestandteile der Schraubverbindung in das Wälzlager gelangen und dieses beschädigen.

Im Unterschied dazu ist die Spritzspitze nach der DE 10 2006 053 237 A1 auf ein stufig ausgebildetes Ende der Welle aufgeschraubt, wobei Späne und Abrieb aus dieser Schraubverbindung ungehindert radial austreten können, so dass sie in das Wälzlager bzw. in den Schmiermittelumlauf gelangen. Ein Sammelraum zur Aufnahme dieser Bestandteile der Schraubverbindung ist jedenfalls nach dieser Druckschrift nicht vorgesehen.

In weiterer Ausgestaltung der Erfindung soll die Spritzspitze einteilig mit einem Gewindebolzen ausgebildet sein. Dieser Gewindebolzen wird dabei in eine Gewindebohrung, die am Ende der Welle vorgesehen ist, eingeschraubt. Die gesamte mit dem Gewindebolzen ausgebildete Spritzspitze ist folglich wie eine in die Gewindebohrung einschraubbare Schraube ausgebildet. Außerdem kann dabei die Spritzspitze an ihrem von der Stirnfläche der Welle abgewandten Ende mit einem Innensechskant versehen sein. Mittels eines Inbusschlüssels kann in diesen Innensechskant eingegriffen werden, um die Spritzspitze mit einem entsprechenden Anzugsmoment auf der Welle zu befestigen. Darüber hinaus besteht alternativ natürlich auch die Möglichkeit, am Ende der Spritzspitze einen Außensechskant oder einen Zweiflach, der durch sehnenartig verlaufende Abflachungen an einem Wellenstummel hergestellt werden kann und an dem mit einem Maulschlüssel angegriffen werden kann, vorzusehen. Weiter sind an dieser Stelle alle bekannten Arten der Drehmokmentübertragung möglich, dies wären beispielsweise Torx, Inbus, Schlitz, 4 Kant oder auch 6 Kant Schraubverbindungen. Anstelle der einteiligen Ausbildung des Gewindebolzens mit der Spritzspitze kann auch eine die Spritzspitze axial durchdringende Schraube vorgesehen sein, die in das Innengewinde der Welle eingeschraubt ist und über die die Spritzspitze gegenüber der Stirnfläche der Welle oder einem Innenring des Wälzlagers verspannt wird.

Im Zusammenhang mit dieser Fixierung der Spritzspitze über einen von dieser ausgehenden Gewindebolzen, der in ein Innengewinde der Welle eingeschraubt wird, soll weiterhin die Welle an ihrem zur Aufnahme der Spritzspitze dienenden Ende mit einer Sackbohrung versehen sein, an deren unterem Abschnitt der Sammelraum ausgebildet ist. Die Sackbohrung weist, ausgehend von der Stirnfläche der Welle zunächst einen Gewindeabschnitt und schließlich den sich daran anschließenden Sammelraum auf. Somit lässt sich auf diese Weise das Austreten von Spänen und Abrieb sehr wirkungsvoll und mit geringem Fertigungsaufwand verhindern, da diese beim Einschrauben des Gewindebolzens in das Innengewinde der Sackbohrung in den an deren Ende befindlichen Sammelraum fallen.

Weiterhin kann der Gewindebolzen an seinem zwischen der Spritzspitze und einem Gewindeabschnitt liegenden Bereich mit einer Zentrierfläche versehen sein. Eine entsprechende Zentrierfläche ist dabei vorzugsweise als radial vorstehender Bund ausgebildet, der mit einem entsprechenden Bohrungsabschnitt der Sackbohrung eine Passung bildet. Somit kann die Spritzspitze sehr präzise zur Welle geführt sein, damit eine Unwucht vermieden wird.

Gemäß einer weiteren alternativen Ausgestaltung der Verbindung der Spritzspitze mit der Welle soll von der Stirnfläche der Welle ein konzentrisch zur Welle verlaufender Gewindezapfen ausgehen, auf dem die Spritzspitze mittels eines Innengewindes befestigbar ist. In diesem Fall ist die Spritzspitze also mutternartig ausgebildet, wobei der Sammelraum als in der Stirnfläche radial zum Gewindezapfen verlaufender Ringraum ausgebildet sein soll, so dass dieser Ringraum ebenfalls dazu geeignet ist, die sich von dem Gewinde lösenden Bestandteile (Abriebpartikel) aufzunehmen. Eine entsprechende Ausbildung des Sammelraums als Ringraum eignet sich allerdings auch für die zuvor erläuterte Ausbildung der Spritzspitze mit einem von dieser ausgehenden Gewindebolzen oder einer in der Spritzspitze angeordneten Befestigungsschraube, da auch in diesem Fall die entsprechenden Bestandteile (Abriebpartikel) in diese Ringnut gelangen.

Weiterhin soll eine der Stirnfläche der Welle zugewandte Anschraubfläche der Spritzspitze an ihrem Umfang von einer über diese in axialer Richtung vorstehende Ringfläche umgeben sein, über die die Spritzspitze an einer stirnseitigen Ringfläche eines Innenrings des Wälzlagers abgestützt ist. Mittels dieser Ringfläche umschließt die Spritzspitze das Ende der Welle um ein geringes Maß in axialer Richtung und überträgt das Anzugsmoment unmittelbar als Spannkraft auf den Innenring des Wälzlagers, so dass dieser mit ausreichender Vorspannung auf der Welle fixiert ist.

Außerdem soll unterhalb des Wälzlagers auf der Welle eine Leiteinrichtung zur Rückleitung des Schmiermittels zum Schmiermittelspeicher und/oder zum Kapillarsystem angeordnet sein. Diese Leiteinrichtung kann als rotationssymmetrisches Bauelement mit einem kegelstumpfförmigen Führungsabschnitt und einem sich daran anschließenden radial verlaufenden Abschnitt ausgebildet sein. Dabei besteht die Möglichkeit, die entsprechende kegelstumpfförmig verlaufende Außenmantelfläche an einem Blechteil auszubilden, von welchem ein auf der Welle geführter Hülsenabschnitt ausgeht, über den die Leiteinrichtung auf der Mantelfläche der Welle fixiert ist.

Die Erfindung ist nicht auf die Merkmale des Patentanspruchs 1 und der auf ihn rückbezogenen abhängigen Patentansprüche beschränkt. Soweit Merkmale im Rahmen der Patentanmeldung offenbart sind, sei es in den Vorteilsangaben zu den Patentansprüchen, in der nachfolgenden Beschreibung von Ausführungsbeispielen der Erfindung oder in den Zeichnungen, können diese mit einzelnen Merkmalen der Patentansprüche kombiniert werden. Weiterhin soll die Bezugnahme der Patentansprüche auf die Zeichnung durch die Verwendung von Bezugszeichen die Erfindung nicht auf diese konkreten Darstellungen beschränken.

### Kurze Beschreibung der Zeichnung

Zur weiteren Erläuterung der Erfindung wird auf die Zeichnung verwiesen, in der zwei Ausführungsbeispiele der Erfindung vereinfacht dargestellt sind. Es zeigen:
- Figur 1: eine erfindungsgemäße Turbomolekularvakuumpumpe mit einer auf einer Welle angeordneten Spritzspitze im Längsschnitt,
- Figur 2: im Längsschnitt eine Anordnung der Spritzspitze an der Welle, die im Wesentlichen der Anordnung nach der Figur 1 entspricht, wobei ein zur Welle verlaufender Gewindezapfen von einem als Ringraum ausgebildeten Sammelraum umgeben ist und
- Figur 3: im Längsschnitt eine Anordnung der Spritzspitze auf der Welle, wobei die Spritzspitze einteilig mit einem Gewindebolzen ausgebildet ist, der in eine in der Welle vorgesehene Sackbohrung eingeschraubt ist.

### Ausführliche Beschreibung der Zeichnung

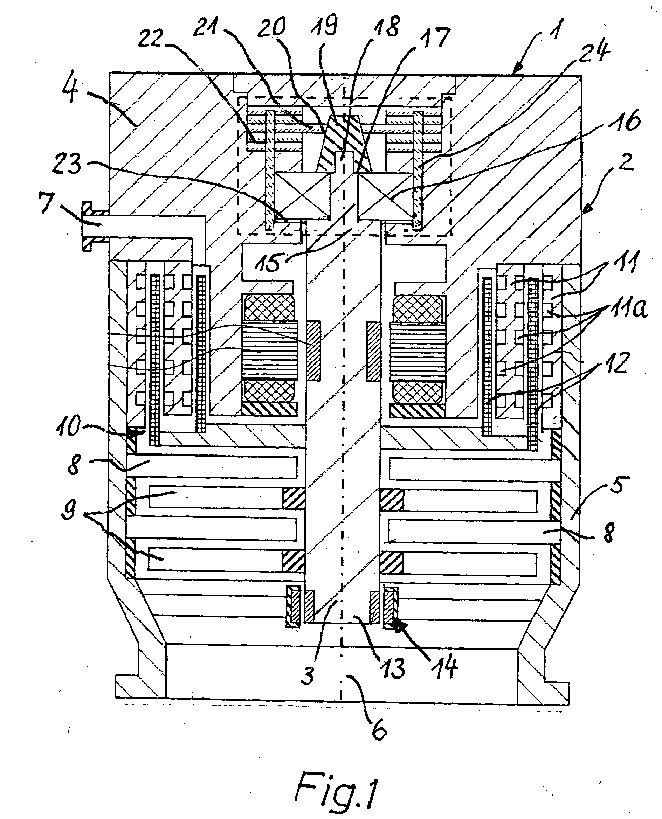

In Figur 1 ist mit 1 eine einflutige Turbomolekularvakuumpumpe bezeichnet, die ein im Wesentlichen zylindrisches Pumpengehäuse 2 und eine in diesem drehbar angeordnete schnell drehende Welle 3 aufweist. Dabei besteht das Pumpengehäuse 2 aus einem Unterteil 4 und einem Oberteil 5. Im Oberteil 5 ist ein vertikal nach unten gerichteter Ansaugkanal 6 ausgebildet, über den das gasförmige Medium, insbesondere Luft, angesaugt wird. Das Unterteil 4 weist einen von diesem radial abzweigenden Auslassstutzen 7 auf, durch den das verdichtete gasförmige Medium das Pumpengehäuse 2 verlässt und in eine nicht näher dargestellte Druckleitung geleitet wird.

Zum Ansaugen und Verdichten des gasförmigen Mediums sind im Oberteil 5, sich von diesem aus radial nach innen erstreckende Statorscheiben 8 angeordnet, die mit auf der Welle 3 angeordneten Rotorscheiben 9, welche sich von der Welle aus radial nach außen erstrecken, zusammenwirken. Es handelt sich dabei um mehrere Stufen von Statorscheiben 8 und Rotorscheiben 9. Diesen Stufen ist im dargestellten Beispiel eine Holweckpumpestufe 10 nachgeschaltet, die zweistufig ausgebildet ist und aus Holweckstatoren 11 sowie mit der Welle 3 verbundene Holweckrotoren 12 aufweist. Die Holweckstatoren 11 sind zylindrisch ausgebildet und weisen an ihren Mantelflächen schraubenlinienartig verlaufende Kanäle 11a auf.

Die Welle 3 ist an ihrem unteren Ende 13 in einem Permanentmagnetlager 14 drehbar geführt, während ein oberes Ende 15 der Welle 3 gegenüber dem Unterteil 4 des Pumpengehäuses 2 mittels eines Wälzlagers 16 gelagert ist. Zur Aufnahme des Wälzlagers 16 ist die Welle 3 stufig ausgebildet, wobei von einer das Wälzlager 16 aufnehmenden Stufe 17 ein konzentrisch zur Welle 3 verlaufender Gewindezapfen 18 ausgeht, auf den eine Spritzspitze 19 aufgeschraubt ist.

Diese Spritzspitze 19 weist eine kegelstumpfförmige Mantelfläche 20 auf, an der ein horizontal verlaufendes Fördermittel 21 anliegt. Außerdem umgibt die Spritzspitze 19 ein Schmiermittelspeicher 22, von dem das Fördermittel 21 aus radial nach innen bis an die Mantelfläche 20 der Spritzspitze 19 reicht.

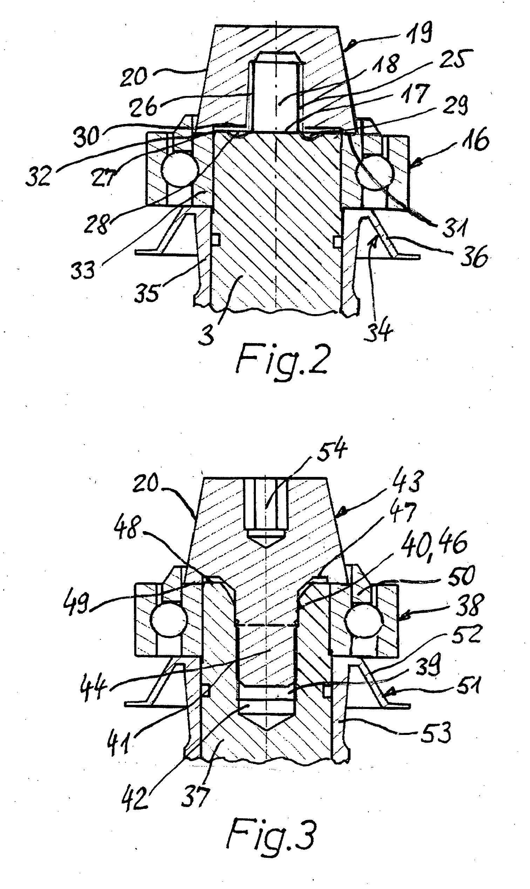

Schmiermittel wird aus diesem Schmiermittelspeicher 22 mittels des Fördermittels 21 auf die Mantelfläche 20 der Spritzspitze 19 übertragen, wobei es aufgrund der hohen Fliehkräfte entlang der kegelstumpfförmigen Mantelfläche 20 und somit in das Innere des Wälzlagers 16 gefördert wird, wo es die Wälzkörper und die Laufbahnen des jeweiligen Innen- und Außenringes schmiert und kühlt. Das Schmiermittel durchströmt dabei das Wälzlager 16 und gelangt anschließend in zumindest einen Rücklaufkanal 23, über das es einem in vertikaler Richtung wirkenden Kapillarsystem 24 zugeführt wird und über dieses in den Schmiermittelspeicher 22 zurückgefördert wird. Hinsichtlich der erfindungsgemäßen Anordnung der Spritzspitze 19 sei auf die Figuren 2 und 3 verwiesen, die unterschiedliche Ausgestaltungsbeispiele dieser Anordnung zeigen.

In der Figur 2 sind den einzelnen Bauelementen die gleichen Bezugszeichen wie in Figur 1 zugeordnet, da hinsichtlich der Spritzspitze 19 eine im Wesentlichen mit der Figur 1 übereinstimmende Art der Fixierung verwendet wird. Danach weist die Spritzspitze 19 eine in ihrer Längsmittelachse verlaufende Bohrung 25 auf, die mit einem Innengewinde 26 versehen ist. Mittels dieses Innengewindes 26 ist die Spritzspitze 19 auf den Gewindezapfen 18 aufgeschraubt. In einer den Gewindezapfen 18 radial umgebenden ringförmigen Stirnfläche 27 der Welle 3 ist ein Sammelraum 28 vorgesehen, der in diesem Fall als Ringraum ausgebildet ist. Beim Aufschrauben der Spritzspitze 19 auf den Gewindezapfen 18 gelangen Späne und Abrieb in diesen als Ringraum ausgebildeten Sammelraum 28 und können somit nicht in das Innere des Wälzlagers 16 gelangen.

Die Spritzspitze weist außerdem an ihrer der Stirnfläche 27 zugewandten Anschraubfläche 30 eine vorstehende Ringfläche 31 auf, über die die Spritzspitze 19 beim Festschrauben auf einer Ringfläche 32 eines Innenrings 33 des Wälzlagers 16 abgestützt ist. Das das Wälzlager 16 durchströmende Schmiermittel gelangt anschließend auf eine Leiteinrichtung 34 und von dort aus in den in der Figur 2 nicht näher dargestellten Rücklaufkanal, der in der Figur 1 mit 23 bezeichnet ist. Diese Leiteinrichtung 34 ist als spanlos umgeformtes, dünnwandiges Blechteil ausgebildet und weist einen auf der Welle 3 geführten Hülsenabschnitt 35 sowie eine kegelstumpfförmig verlaufende Außenmantelfläche 36 auf.

Im Gegensatz zur Figur 2 ist nach der Figur 3 eine schnell drehende Welle 37, die über ein Wälzlager 38 in entsprechender Weise in einem vorzugsweise gemäß Figur 1 ausgebildeten Unterteil 4 des Pumpengehäuses 2 gelagert ist, an ihrem entsprechenden im Wälzlager 38 geführten Ende mit einer Sackbohrung 39 versehen. Diese Sackbohrung 39 weist in ihrem zum Ende der Welle 37 gerichteten Bereich eine ringförmige Zentrierfläche 40 auf, an die sich ein Innengewinde 41 sowie ein endseitiger Sammelraum 42 anschließen. Eine Spritzspitze 43 ist gemäß der Figur 3 einteilig mit einem Gewindebolzen 44 ausgebildet. Ferner weist der Gewindebolzen 44 oberhalb seines Außengewindes 45, also in seinem zur Spritzspitze 43 gerichteten Abschnitt eine radial vorstehende Zentrierfläche 46 auf, die gemeinsam mit der Zentrierfläche 40 der Sackbohrung 39 eine Passung bildet.

Wie der Figur 3 entnommen werden kann, werden Späne oder Abtrieb von dem am Ende der Sackbohrung 39 vorgesehenen Sammelraum 42 aufgenommen und können folglich nicht in das Schmiersystem des Wälzlagers 38 gelangen. Es sei darauf hingewiesen, dass natürlich die Anordnung nach der Figur 3 in entsprechender Weise innerhalb einer Gesamtausbildung einer Turbomolekularvakuumpumpe 1 nach Figur 1 Anwendung finden kann. Die Spritzspitze nach der Figur 3 weist an ihrer Anschraubfläche 47, die einer Stirnfläche 48 der Welle 37 zugewandt ist, eine vorstehende Ringfläche 49 auf, über die die Spritzspitze 43 das Wälzlager 38 über seinen Innenring 50 auf der Welle 37 festlegt. Weiter wird mit dieser vorstehenden Ringfläche auch der Sammelraum zum Wälzlager hin, zum Schutz vor austretenden Partikeln, abgedichtet.

Unterhalb des Wälzlagers 38 ist dabei eine als Blechteil ausgebildete Leiteinrichtung 51 angeordnet, die eine kegelstumpfförmig verlaufende Außenmantelfläche 52 und einen auf der Welle 37 geführten Hülsenabschnitt 53 aufweist. Weiterhin ist an dem stirnseitigen Ende der Spritzspitze 43 ein zentrisch verlaufender Innensechskant 54 vorgesehen, über welchen mittels eines Inbusschlüssels die Spritzspitze 43 an die Welle 37 angeschraubt und mit dieser bzw. dem Innenring 50 des Wälzlagers 38 verspannt werden kann.

Den Figuren 2 und 3 kann entnommen werden, dass im Bereich der Schraubverbindung der Spritzspitze 19 bzw. 43 mit der Welle 3, 37 ein Sammelraum 28, 42 vorgesehen ist, in welchen Späne oder Abrieb aus der Schraubverbindung gefördert werden und somit nicht in das Wälzlager 16, 38 gelangen können.

### Bezugszeichenliste

- 1: Turbomolekularvakuumpumpe
- 2: Pumpengehäuse
- 3: Welle
- 4: Unterteil von 2
- 5: Oberteil von 2
- 6: Ansaugkanal
- 7: Auslassstutzen
- 8: Statorscheiben
- 9: Rotorscheiben
- 10: Holweckpumpe
- 11: Holweckstatoren
- 11a: Kanäle
- 12: Holweckrotoren
- 13: unteres Ende von 3
- 14: Permanentmagnetlager
- 15: oberes Ende von 3
- 16: Wälzlager
- 17: Stufe
- 18: Gewindezapfen
- 19: Spritzspitze
- 20: kegelstumpfförmige Mantelfläche
- 21: Fördermittel
- 22: Schmiermittelspeicher
- 23: Rücklaufkanal
- 24: Kapillarsystem
- 25: Bohrung
- 26: Innengewinde
- 27: ringförmige Stirnfläche
- 28: Sammelraum
- 29: Ringraum
- 30: Anschraubfläche
- 31: vorstehende Ringfläche
- 32: Ringfläche am Innenring von 16
- 33: Innenring von 16
- 34: Leiteinrichtung
- 35: Hülsenabschnitt
- 36: kegelstumpfförmig verlaufende Außenmantelfläche von 34
- 37: Welle
- 38: Wälzlager
- 39: Sackbohrung
- 40: Zentrierfläche von 39
- 41: Innengewinde
- 42: Sammelraum
- 43: Spritzspitze
- 44: Gewindebolzen
- 45: Außengewinde
- 46: Zentrierfläche
- 47: Anschraubfläche
- 48: Stirnfläche
- 49: Ringfläche
- 50: Innenring von 38
- 51: Leiteinrichtung
- 52: kegelstumpfförmig verlaufende Außenmantelfläche
- 53: Hülsenabschnitt
- 54: Innensechskant

## Patentansprüche

1. Schmiereinrichtung für ein Wälzlager (16, 38), welches zur Lagerung einer mit hoher Drehzahl angetriebenen Welle (3, 37) vorgesehen ist,
wobei die Schmiereinrichtung zumindest einen Schmiermittelspeicher (22), ein Fördermittel (21), eine Spritzspitze (19, 43) und die Welle (3, 37) umfasst,
wobei Schmiermittel aus dem zumindest einen Schmiermittelspeicher (22) über das Fördermittel (21) und eine Mantelfläche (20) der kegelstumpfförmig ausgebildeten Spritzspitze (19, 43) in das Wälzlager (16, 38) gefördert wird, wobei die Spritzspitze (19, 43) über eine Schraubverbindung an einem eine Stirnfläche (27) bildenden Ende (15) der Welle (3, 37), dem Wälzlager (16, 38) benachbart, befestigt ist,
wobei der Schraubverbindung benachbart, von der Stirnfläche (27) der Welle (3, 37) ein Sammelraum (28, 42) zur Aufnahme von Spänen und Abrieb ausgeht, und
wobei die Spritzspitze (43) einteilig mit einem Gewindebolzen (44) ausgebildet ist,
**dadurch gekennzeichnet, dass**
die Welle (37) an ihrem zur Aufnahme der Spritzspitze (43) dienenden Ende mit einer Sackbohrung (39) versehen ist, an deren unterem Abschnitt der Sammelraum (42) ausgebildet ist.

2. Schmiereinrichtung für ein Wälzlager nach Patentanspruch 1, **dadurch gekennzeichnet, dass** die Spritzspitze (43) an ihrem von der Stirnfläche (27) der Welle (37) abgewandten Ende mit einem Innensechskant (54) versehen ist.

3. Schmiereinrichtung für ein Wälzlager nach Patentanspruch 1, **dadurch gekennzeichnet, dass** der Gewindebolzen (44) an seinem zwischen der Spritzspitze (43) und einem Gewindeabschnitt (45) liegenden Bereich mit einer Zentrierfläche (46) versehen ist.

4. Schmiereinrichtung für ein Wälzlager nach Patentanspruch 1, **dadurch gekennzeichnet, dass** von der Stirnfläche (27) der Welle (3) ein konzentrisch zur Welle (3) verlaufender Gewindezapfen (18) ausgeht, auf dem die Spritzspitze (19) mittels eines Innengewindes (26) befestigbar ist.

5. Schmiereinrichtung für ein Wälzlager (16, 38), welches zur Lagerung einer mit hoher Drehzahl angetriebenen Welle (3, 37) vorgesehen ist, wobei Schmiermittel aus zumindest einem Schmiermittelspeicher (22) über Fördermittel (21) und eine Mantelfläche (20) einer kegelstumpfförmig ausgebildeten Spritzspitze (19, 43) in das Wälzlager (16, 38) gefördert wird, wobei die Spritzspitze (19, 43) über eine Schraubverbindung an einem eine Stirnfläche (27) bildenden Ende (15) der Welle (3, 37), dem Wälzlager (16, 38) benachbart, befestigt ist,
wobei der Schraubverbindung benachbart, von der Stirnfläche (27) der Welle (3, 37) ein Sammelraum (28, 42) zur Aufnahme von Spänen und Abrieb ausgeht,
**dadurch gekennzeichnet, dass**
der Sammelraum (28) als in der Stirnfläche (27) der Welle (3) radial zu einem Gewindezapfen (18) oder zu einem Gewindebolzen verlaufender Ringraum (29) ausgebildet ist, und dass die Spritzspitze (19) eine in ihrer Längsmittelachse verlaufende Bohrung (25) aufweist, die mit einem Innengewinde (26) versehen ist.

6. Schmiereinrichtung für ein Wälzlager nach einem der Patentansprüche 1 oder 5, **dadurch gekennzeichnet, dass** eine der Stirnfläche (27) der Welle (3, 37) zugewandte Anschraubfläche (30) der Spritzspitze (19, 43) von einer über diese in axialer Richtung vorstehende Ringfläche (31) umgeben ist, über die die Spritzspitze (19, 43) an einer stirnseitigen Ringfläche (32) eines Innenrings (33, 50) des Wälzlagers (16, 38) abgestützt ist.

7. Schmiereinrichtung für ein Wälzlager nach einem der Patentansprüche 1 oder 5, **dadurch gekennzeichnet, dass** unterhalb des Wälzlagers (16, 38) auf der Welle (3, 37) eine Leiteinrichtung (34, 51) zur Rückleitung des Schmiermittels zum Schmiermittelspeicher (22) und/oder zum Kapillarsystem (24) angeordnet ist.

8. Schmiereinrichtung für ein Wälzlager nach Patentanspruch 7, **dadurch gekennzeichnet, dass** die Leiteinrichtung (34, 51) als ein eine kegelstumpfförmig verlaufende Außenmantelfläche (36, 52) aufweisendes Blechteil ausgebildet ist, von welchem ein auf der Welle (3, 37) geführter Hülsenabschnitt (35, 53) ausgeht.

## Claims

1. A lubrication device for a rolling bearing (16, 38) which is provided for supporting a shaft (3, 37) driven at a high rotational speed,
wherein the lubrication device comprises at least one lubricant store (22), a conveying means (21), a spray tip (19, 43) and the shaft (3, 37);
wherein lubricant is conveyed from the at least one lubricant store (22) via the conveying means (21) and a jacket surface (20) of the frustoconical spray tip (19, 43) into the rolling bearing (16, 38), with the spray tip (19, 43) being fastened, adjacent to the rolling bearing (16, 38), via a screw connection to an end (15) of the shaft (3, 37) forming an end face (27);
wherein, adjacent to the screw connection, a collection space (28, 42) for receiving chips and worn parts starts from the end face (27) of the shaft (3, 37); and
wherein the spray tip (43) is formed in one part with a threaded bolt (44),
**characterized in that**
the shaft (37) is provided with a blind bore (39) at its end serving for the reception of the spray tip (43), with the collection space (42) being formed at the lower section of said blind bore.

2. A lubrication device for a rolling bearing in accordance with claim 1,
**characterized in that** the spray tip (43) is provided with a hexagon socket (54) at its end remote from the end face (27) of the shaft (37).

3. A lubrication device for a rolling bearing in accordance with claim 1,
**characterized in that** the threaded bolt (44) is provided with a centering surface (46) at its region disposed between the spray tip (43) and a threaded section (45).

4. A lubrication device for a rolling bearing in accordance with claim 1,
**characterized in that** a threaded spigot (18) extending concentrically to the shaft (3) starts from the end face (27) of the shaft (3) and the spray tip (19) is fastenable at said threaded spigot (18) by means of an internal thread (26).

5. A lubrication device for a rolling bearing (16, 38) which is provided for supporting a shaft (3, 37) driven at a high rotational speed, wherein lubricant is conveyed from at least one lubricant store (22) via conveying means (21) and a jacket surface (20) of a frustoconical spray tip (19, 43) into the rolling bearing (16, 38), with the spray tip (19, 43) being fastened, adjacent to the rolling bearing (16, 38), via a screw connection to an end (15) of the shaft (3, 37) forming an end face (27); and
wherein, adjacent to the screw connection, a collection space (28, 42) for receiving chips and worn parts starts from the end face (27) of the shaft (3, 37),
**characterized in that**
the collection space (28) is formed as a ring space (29) extending radially to a threaded spigot (18) or to a threaded bolt in the end face (27) of the shaft (3); and **in that** the spray tip (19) has a bore (25) which extends in its longitudinal central axis and which is provided with an internal thread (26).

6. A lubrication device for a rolling bearing in accordance with one of the claims 1 or 5, **characterized in that** a screw-on surface (30) of the spray tip (19, 43) facing the end face (27) of the shaft (3, 37) is surrounded by a ring surface (31) which projects beyond it in the axial direction and via which the spray tip (19, 43) is supported at an end-face ring surface (32) of an inner ring (33, 50) of the rolling bearing (16, 38).

7. A lubrication device for a rolling bearing in accordance with one of the claims 1 or 5, **characterized in that** a conducting device (34, 51) for returning the lubricant to the lubricant store (22) and/or to a capillary system (24) is arranged beneath the rolling bearing (16, 38) at the shaft (3, 37).

8. A lubrication device for a rolling bearing in accordance with claim 7,
**characterized in that** the conducting device (34, 51) is configured as a sheet metal part which has an outer jacket surface (36, 52) extending in a frustoconical shape and from which a sleeve section (35, 53) guided at the shaft (3, 37) starts.

## Revendications

1. Dispositif de lubrification pour un palier à roulement (16, 38) prévu pour le montage d'un arbre (3, 37) entraîné à une vitesse de rotation élevée,
le dispositif de lubrification comprenant au moins un réservoir à lubrifiant (22), un moyen de convoyage (21), un nez d'injection (19, 43) et ledit arbre (3, 37),
dans lequel le lubrifiant est convoyé dans le palier à roulement (16, 38) à partir dudit au moins un réservoir à lubrifiant (22) via le moyen de convoyage (21) et via une surface enveloppe (20) du nez d'injection (19, 43) réalisé en forme tronconique, le nez d'injection (19, 43) est fixé à une extrémité (15), formant une surface frontale (27), de l'arbre (3, 37) au voisinage du palier à roulement (16, 38) via une liaison vissée,
et au voisinage de la liaison vissée, un compartiment collecteur (28, 42) destiné à recevoir des copeaux et des particules d'abrasion s'étend depuis la surface frontale (27) de l'arbre (3, 37), et
le nez d'injection (43) est réalisé d'un seul tenant avec un boulon fileté (44),
**caractérisé en ce que**
à son extrémité servant à recevoir le nez d'injection (43), l'arbre (37) est percé d'un trou borgne (39) dont la portion inférieure constitue ledit compartiment collecteur (42).

2. Dispositif de lubrification pour un palier à roulement selon la revendication 1,
**caractérisé en ce que**
à son extrémité détournée de la surface frontale (27) de l'arbre (37), le nez d'injection (43) est pourvu d'un six pans creux (54).

3. Dispositif de lubrification pour un palier à roulement selon la revendication 1,
**caractérisé en ce que**
dans sa zone située entre le nez d'injection (43) et un tronçon fileté (45), le boulon fileté (44) est pourvu d'une surface de centrage (46).

4. Dispositif de lubrification pour un palier à roulement selon la revendication 1,
**caractérisé en ce que**
un tourillon fileté (18) s'étendant concentriquement à l'arbre (3) s'étend depuis la surface frontale (27) de l'arbre (3), tourillon sur lequel peut être fixé le nez d'injection (19) au moyen d'un taraudage (26).

5. Dispositif de lubrification pour un palier à roulement (16, 38) qui est prévu pour le montage d'un arbre (3, 37) entraîné à une vitesse de rotation élevée,
dans lequel un lubrifiant est convoyé dans le palier à roulement (16, 38) à partir au moins un réservoir à lubrifiant (22) via des moyens de convoyage (21) et via une surface enveloppe (20) d'un nez d'injection (19, 43) réalisé en forme tronconique, le nez d'injection (19, 43) est fixé à une extrémité (15), formant une surface frontale (27), de l'arbre (3, 37) au voisinage du palier à roulement (16, 38) via une liaison vissée,
et au voisinage de la liaison vissée, un compartiment collecteur (28, 42) destiné à recevoir des copeaux et des particules d'abrasion s'étend depuis la surface frontale (27) de l'arbre (3, 37),
**caractérisé en ce que**
le compartiment collecteur (28) est réalisé sous la forme d'un compartiment annulaire (29) qui s'étend dans la surface frontale (27) de l'arbre (3) radialement par rapport à un tourillon fileté (18) ou à un boulon fileté, et **en ce que** le nez d'injection (19) présente un perçage (25) s'étendant sur son axe médian longitudinal et pourvu d'un taraudage (26).

6. Dispositif de lubrification pour un palier à roulement selon l'une des revendications 1 à 5,
**caractérisé en ce que**
une surface de vissage du nez d'injection (19, 43) tournée vers la surface frontale (27) de l'arbre (3, 37) est entourée par une surface annulaire (31) qui dépasse au-delà de celle-ci en direction axiale et par laquelle le nez d'injection (19, 43) est appuyé sur une surface annulaire (32) côté frontal d'un anneau intérieur (33, 50) du palier à roulement (16, 38).

7. Dispositif de lubrification pour un palier à roulement selon l'une des revendications 1 ou 5,
**caractérisé en ce que**
un moyen de guidage (34, 51) destiné à guider le lubrifiant en retour vers le réservoir à lubrifiant (22) et/ou vers le système capillaire (24) est agencé sur l'arbre (3, 37) au-dessous du palier à roulement (16, 38).

8. Dispositif de lubrification pour un palier à roulement selon la revendication 7,
**caractérisé en ce que**
le moyen de guidage (34, 51) est réalisé sous la forme d'une pièce en tôle présentant une surface enveloppe extérieure (36, 52) qui s'étend en forme tronconique, depuis laquelle s'étend une portion de douille (35, 53) guidée sur l'arbre (3, 37).
